# EUROPEAN PATENT APPLICATION

(11) **EP 2 372 173 A1**
(43) Date of publication of application: **05.10.2011**
(21) Application number: 11250174.7
(22) Date of filing: 15.02.2011
(51) Int. Cl.: F16B 7/14

(54) **An adjustment device for use in adjusting the length of a telescopic arrangement**

(30) Priority: 25.03.2010 GB 1005055
(71) Applicant: Fox International Group Limited, Hainault Essex IG6 3UT (GB)
(72) Inventor: Little, Mark, Billericay, Essex CM12 9QY (GB)
(74) Representative: Crouch, David John

(57) **Abstract**

An adjustment device (16) for use in adjusting the length of a telescopic arrangement (10). It comprises a helical torsion spring (24) through which extends the inner part (14) of a telescopic arrangement (10) when the device (16) is in use in a direction along the axis of the spring (24). A retainer (18) receives at least one end of the spring (24) and is attached to an end of the outer part (12) of such a telescopic arrangement (10) when the device (16) is in use. A collar (28) receives the other end of the spring (24) and is rotatable relative to the retainer (18) so as to increase the cross-sectional diameter of the spring (24) thereby to enable the inner part (14) of such a telescopic arrangement (10) to be slid through the spring (24) so as to adjust the length of such an arrangement (10) to a desired length. The collar (28) may then be released to reduce the said diameter so that such an inner part (14) is gripped by the spring (24) and is inhibited from movement relative to such an outer part (12).

Also, a telescopic arrangement (10), the length of which is adjustable by means of such an adjustment device (16).

The telescopic arrangement (10) may comprise a limb of a piece of furniture, especially but not exclusively a leg of an outdoor chair or bedchair.

## Description

The present invention relates to an adjustment device for use in adjusting the length of a telescopic arrangement.

Such a device is described and illustrated in GB-A-2239391 and also in GB-A-2327872. The device described in the former patent specification involves the use of a ratchet so that the adjustment between the two parts of the telescopic arrangement is restricted to possible positions of engagement with the ratchet. The latter patent specification describes an adjustment device a part of which bites into the inner part of the telescopic arrangement to an extent that it can be damaged.

The present invention seeks to provide a remedy.

Accordingly, the present invention is directed to an adjustment device for use in adjusting the length of a telescopic arrangement comprising a helical torsion spring through which extends the inner part of a telescopic arrangement when the device is in use in a direction along the axis of the spring, a retainer which receives at least one end of the spring and is attached to an end of the outer part of such a telescopic arrangement when the device is in use, and a collar which receives the other end of the spring and is rotatable relative to the retainer so as to increase the cross-sectional diameter of the spring thereby to enable the inner part of such a telescopic arrangement to be slid through the spring so as to adjust the length of such an arrangement to a desired length when the device is in use, whereupon the collar may be released to reduce the said diameter so that such an inner part is gripped by the spring and is inhibited from movement relative to such an outer part when the device is in use.

With the force of the torsion spring acting on such an inner part distributed evenly along the length of the spring, it is unlikely to bite into such an inner part to any extent which would damage it. In this way no over or under tightening occurs such as can easily occur with a previously proposed clamping device comprising a ring nut, for example. Furthermore, the device is less likely to be operated accidentally because there is no pushbutton or lever operation. The collar may provide a large grip area so that it is suitable for use in cold conditions and/or with gloved hands. Such a construction may be infinitely adjustable. Also, it can be made lighter than earlier constructions.

Such an adjustment device may be made as a robust encapsulated construction which is less susceptible to damage than earlier constructions. Such a device is also advantageous in that it can be made so that it can be operated from any relative angular position.

The retainer may comprise a housing which receives more than half of the helical torsion spring.

This facilitates the encapsulation of the spring.

A snap-ring may be provided between the retainer and the collar, with a groove or grooves and/or a recess or recesses being provided in the retainer and the collar so that during assembly the snap-ring may be located between the retainer and the collar within the respective groove or grooves and/or recess or recesses thereof so as to inhibit relative axial movement between the retainer and the collar whilst allowing relative rotation therebetween. This provides for the integrity of the device and also facilitates further the encapsulation of the spring.

The retainer may be provided with fixing means in the form of (a) internal knurling of the sleeve portion of the retainer, and/or (b) adhesive, and/or (c) a pin, and/or (d) an interference fit.

The collar may comprise a hollow cylinder, the exterior of which is knurled around the outside and/or otherwise adapted for gripping by the user.

The helical torsion spring may be provided with an end portion at at least one of its ends received in a groove or recess or slot provided in the retainer or the collar.

The retainer may be provided with an axially extending slot to facilitate assembly of the device by enabling the or one of the straight ends of the helical spring to be slid along the slot when the spring is inserted into the retainer.

The present invention extends to a telescopic arrangement, the length of which is adjustable by means of an adjustment device as defined in one or more of the preceding paragraphs.

The telescopic arrangement may comprise a limb of a piece of furniture, especially but not exclusively the leg of an outdoor chair or bedchair.

Indeed the present invention extends to a chair or bedchair having at least one of its legs in the form of a telescopic arrangement which is adjustable by means of a device as defined in one or more of the preceding paragraphs.

An example of an adjustment device embodying the present invention will now be described in greater detail with reference to the accompanying drawings, in which:
- Figure 1: shows a perspective side view from above of a telescopic arrangement provided with an adjustment device embodying the present invention;

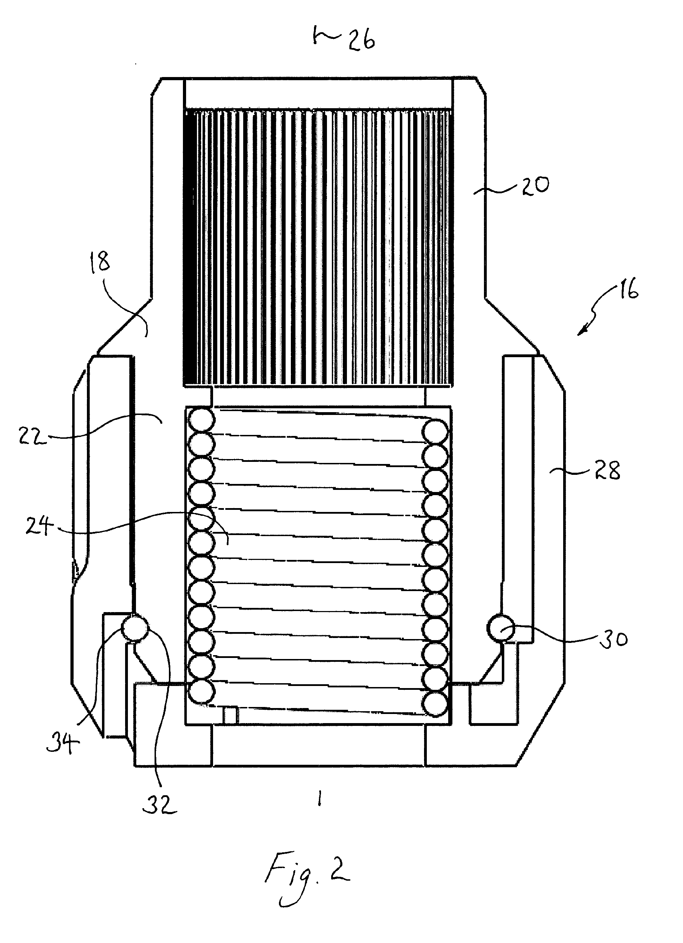

- Figure 2: shows an axial sectional view of the device shown in Figure 1;
- Figure 3: an axial sectional view of the device and telescopic arrangement shown in Figure 1;
- Figure 4: shows an exploded view of the parts of the telescopic arrangement and device shown in Figures 1 and 3;
- Figure 5: shows a exploded view of those parts from a different angle relative to that of Figure 4; and
- Figure 6: shows a perspective view of the assembled condition of some of the parts shown in the exploded views of Figures 4 and 5.

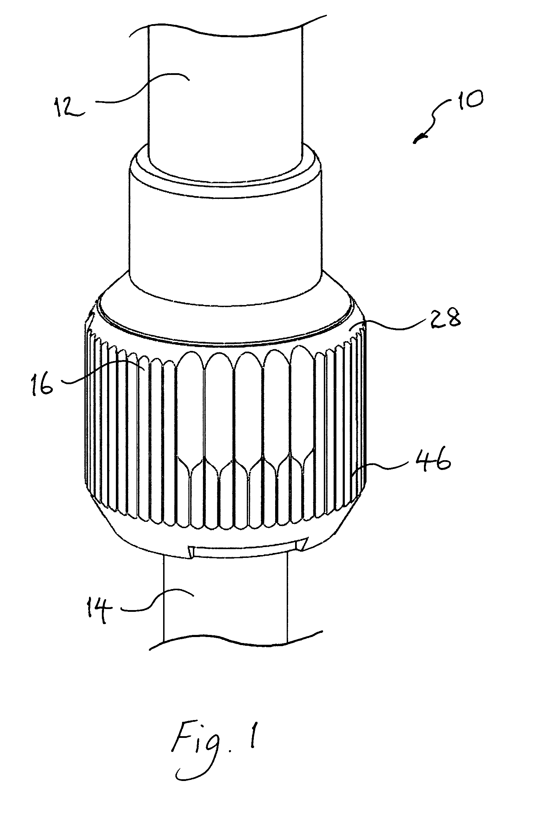

The telescopic arrangement 10 shown in Figure 1 comprises a tubular outer leg part 12, and a tubular inner leg part 14, the combined lengths of which parts can be telescopically adjusted and held with a selected combined length by means of an adjustment device 16.

The adjustment device 16 comprises a retainer part 18 having a generally cylindrical internally knurled attachment portion 20, and a cylindrical portion 22 which is located adjacent to the portion 20 and is integral therewith and which receives the greater part of a helical torsion spring 24. The respective axes of the helical torsion spring 24 and the parts 20 and 22 of the retainer 18 all lie on a common line 26.

A collar 28 of the device 16 is also generally hollow and cylindrical and encompasses the portion 22 of the retainer 18 as a loose fit. A snap-ring 30 is received in respective grooves 32 and 34 of the portion 22 and the collar 28 respectively. This ring inhibits relative axial movement between the collar 28 and the portion 22 of the retainer 18, but at the same time allows relative rotation therebetween.

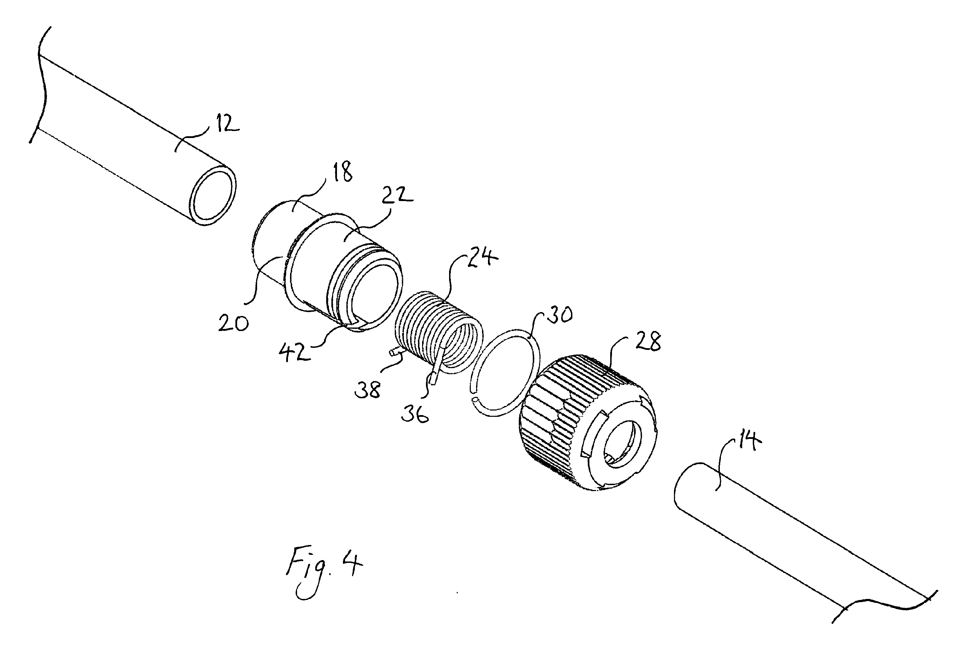

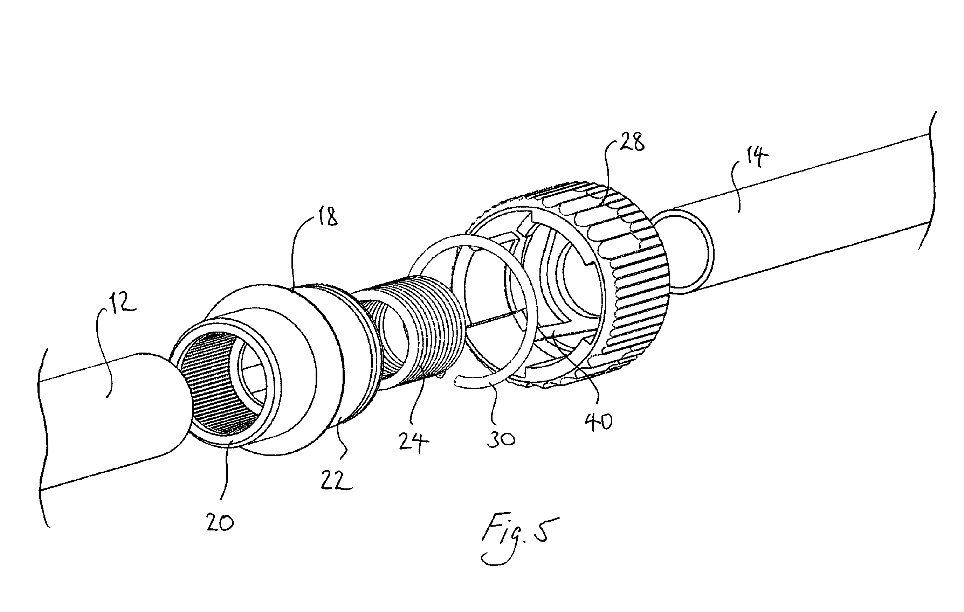

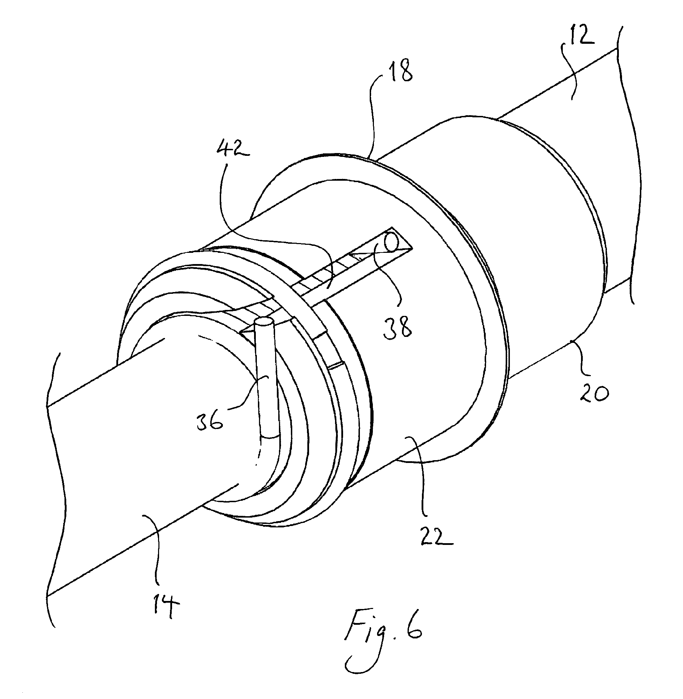

As can be seen more readily from Figures 4, 5 and 6, the helical torsion spring 24 has respective straight end portions or legs 36 and 38 at its opposite ends. One of the straight end portions 36 is received in a groove 40 formed on the inside of the collar 28 and the other straight end portion 38 is received in a slot 42 and in a groove (not shown) in the retainer 18. The slot 42 extends in an axial direction along the portion 22 of the retainer 18, being open at the end thereof. This facilitates assembly of the device 16 by allowing the leg 38 of the spring to slide along the slot 42 as the spring is inserted into the portion 22 during assembly.

The tubular outer leg part 12 has one of its ends inserted into the portion 20 of the retainer 18 such as to be rigidly secured thereto. The strength with which these two parts are attached together may be increased by means of an adhesive (not shown) or by means of a pin (not shown). The inner tubular leg part 14 of the telescopic arrangement has a circular cross-section and extends axially through the helical torsion spring 24 and into that end of the outer leg part 12 which is secured to the retainer 18. The inner leg part 14 fits loosely within the outer leg part 12, but the natural cross-sectional diameter of the helical torsion spring 24 is less than the external diameter of the inner leg portion 14 so that the leg is gripped by the spring 24 when it is not acted upon by the collar 28 and the retainer 18.

The collar 28 is provided with a knurled cylindrical outside wall 46.

The helical spring 24 is preferably made of a springy metal, and the other parts of the device are preferably made of a synthetic plastics material.

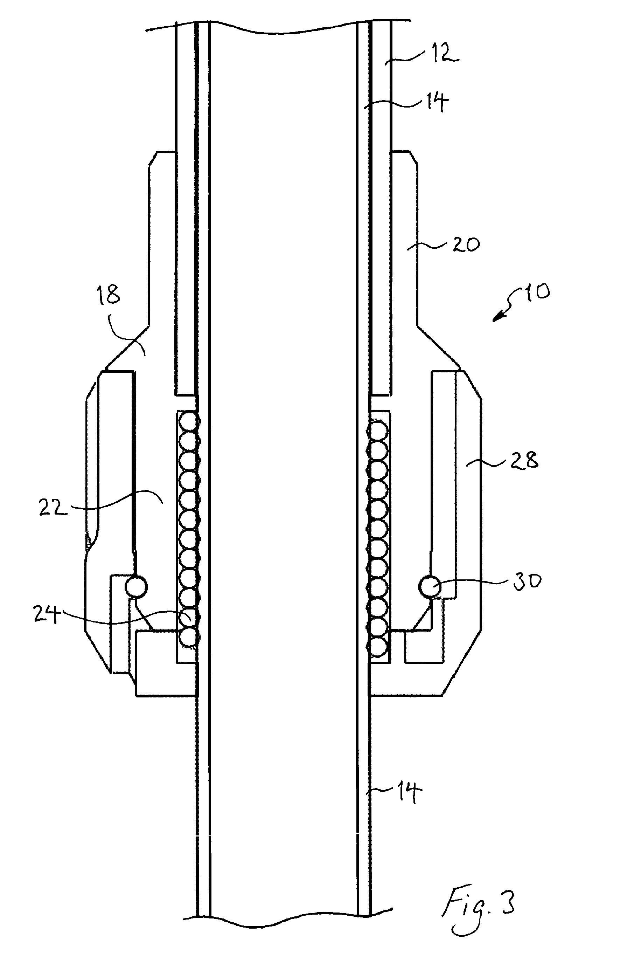

When the device is in use, with the inner and outer leg portions 14 and 12 connected to the device 16 as shown in Figures 1 and 3, the collar 28 can be gripped by the user and rotated in a sense so as to begin to unwind the helical torsion spring 24 and thus to increase its diameter, against the restoring force exerted by the natural resilience of the spring. The inner leg part 14 can now be slid through the helical spring 24 and in or out of the outer leg part 12 so as to change the combined length of the leg parts 12 and 14 to a desired length, whereupon the collar 28 may be released so that the resilience of the spring 24 returns it to its smaller cross-sectional diameter and grips the inner leg part 14 against axial displacement relative to the outer leg part 12.

Numerous variations and modifications may be made to the illustrated device without taking it outside the scope of the present invention. For example, the snap-ring 30 may be replaced by an internal clipping system.

## Claims

1. An adjustment device (16) for use in adjusting the length of a telescopic arrangement (10) comprising a helical torsion spring (24) through which extends the inner part (14) of a telescopic arrangement (10) when the device (16) is in use in a direction along the axis of the spring (24), a retainer (18) which receives at least one end of the spring (24) and is attached to an end of the outer part (12) of such a telescopic arrangement (10) when the device (16) is in use, and a collar (28) which receives the other end of the spring (24) and is rotatable relative to the retainer (18) so as to increase the cross-sectional diameter of the spring (24) thereby to enable the inner part (14) of such a telescopic arrangement (10) to be slid through the spring (24) so as to adjust the length of such an arrangement to a desired length when the device is in use, whereupon the collar (28) may be released to reduce the said diameter so that such an inner part (14) is gripped by the spring (24) and is inhibited from movement relative to such an outer part (12) when the device (16) is in use.

2. An adjustment device according to claim 1, **characterised in that** the retainer (18) comprises a housing (22) which receives more than half of the helical torsion spring (24).

3. An adjustment device according to claim 1 or claim 2, **characterised in that** a snap-ring (30) is provided between the retainer (18) and the collar (28), with a groove or grooves (32, 34) and/or a recess or recesses being provided in the retainer (18) and the collar (28) so that during assembly the snap-ring (30) is located between the retainer (18) and the collar (28) within the respective groove or grooves (32, 34) and/or recess or recesses thereof so as to inhibit relative axial movement between the retainer (18) and the collar (28) whilst allowing relative rotation therebetween.

4. An adjustment device according to any preceding claim, **characterised in that** the retainer (18) is provided with fixing means in the form of (a) internal knurling of the sleeve portion of the retainer (18), and/or (b) adhesive, and/or (c) a pin, and/or (d) an interference fit.

5. An adjustment device according to any preceding claim, **characterised in that** the collar (28) comprises a hollow cylinder, the exterior of which is knurled around the outside and/or otherwise adapted for gripping by the user.

6. An adjustment device according to any preceding claim, **characterised in that** the helical torsion spring (24) is provided with an end portion at at least one of its ends received in a groove (32, 34) or recess or slot provided in the retainer (18) or the collar (28).

7. An adjustment device according to any preceding claim, **characterised in that** the retainer (18) is provided with an axially extending slot (42) to facilitate assembly of the device (16) by enabling a straight end (38) of the helical spring to be slid along the slot (42) when the spring (24) is inserted into the retainer (18).

8. A telescopic arrangement (10), the length of which is adjustable by means of an adjustment device (16) as claimed in any preceding claim.

9. A telescopic arrangement (10) according to claim 8, **characterised in that** it comprises a limb of a piece of furniture, especially but not exclusively a leg of an outdoor chair or bedchair.

10. A chair or bedchair having at least one of its legs in the form of a telescopic arrangement (10) which is adjustable by means of a device (16) as claimed in any one of claims 1 to 7.
